# FASCICULE DE BREVET EUROPEEN

(11) **EP 1 090 783 B1**
(45) Date de publication et mention de la délivrance du brevet: **09.06.2004**
(21) Numéro de dépôt: 00121661.3
(22) Date de dépôt: 04.10.2000
(51) Int. Cl.: B60G 17/02, B60G 11/23, B60G 7/02, B62D 65/00, F16F 1/387, F16F 1/50

(54) **Procédé de stabilisation des caractéristiques mécaniques de fonctionnement d'une articulation élastique d'un dispositif de suspension de véhicule**
Verfahren zur Stabilisierung der mechanischen Wirkungsmerkmale eines elastischen Gelenks einer Fahrzeugaufhängungsvorrichtung
Procedure for stabilising the operational mechanical characteristics of an elastic articulation of a vehicle suspension device

(30) Priorité: 04.10.1999 FR 9912417
(43) Date de publication de la demande: 11.04.2001
(73) Titulaire: Compagnie Generale Des Etablissements Michelin-Michelin & Cie, 63040 Clermont-Ferrand Cédex 09 (FR)
(72) Inventeur: Blondelet, Michel, 63540 Le Crest (FR); Coue, Jean, 63540 Romagnat (FR); Pennequin, Patrick, 63720 Ennezat (FR); Vantal, Mylène, 63000 Clermont-Ferrand (FR)
(74) Mandataire: Bauvir, Jacques

(56) Documents cités:
- EP-A- 0 244 806
- EP-A- 0 475 537
- EP-A- 0 956 984
- DE-A- 1 630 901
- DE-C- 688 421
- DE-C- 976 856
- GB-A- 554 695
- US-A- 2 270 572
- PATENT ABSTRACTS OF JAPAN vol. 012, no. 179 (M-701), 26 mai 1988 (1988-05-26) & JP 62 289408 A (FUJI HEAVY IND LTD), 16 décembre 1987 (1987-12-16)
- PATENT ABSTRACTS OF JAPAN vol. 015, no. 010 (M-1068), 10 janvier 1991 (1991-01-10) & JP 02 261934 A (TOKAI RUBBER IND LTD), 24 octobre 1990 (1990-10-24)
- PATENT ABSTRACTS OF JAPAN vol. 1997, no. 09, 30 septembre 1997 (1997-09-30) & JP 09 132174 A (TOYOTA AUTO BODY CO LTD), 20 mai 1997 (1997-05-20)

## Description

L'invention concerne les dispositifs de suspension de véhicule. Plus particulièrement, l'invention se rapporte aux dispositifs de suspension de véhicule dont l'élément principal formant la fonction "ressort de suspension" est une articulation élastique élastomérique. La demande de brevet WO 97/47486 décrit une articulation selon le préambule de la revendication 16.

L'un des intérêts qu'il y a à utiliser des articulations élastiques élastomériques jouant un rôle de ressort de suspension, au niveau des paliers d'articulation de dispositifs de suspension de véhicule, est de permettre une plus grande intégration des fonctions ressort, amortisseur et filtrage de vibrations ou de chocs. Selon les cahiers des charges à satisfaire pour les différents véhicules, un essieu de ce type peut également permettre de diminuer le nombre total de pièces utilisées, notamment parce qu'on n'utilise pas de blocs de filtrage séparés, tels qu'on les rencontre couramment pour lier les essieux ou les bras de suspension à la caisse du véhicule.

Dans les articulations de suspension, des blocs élastomériques sont dorénavant d'usage universel et ont supplanté l'emploi de roulements ou paliers lisses, car ils sont aptes à conférer le degré de liberté requis tout en assurant un bon filtrage favorable au confort, notamment sur le plan acoustique. En outre, on peut conférer à ces blocs d'articulation et de filtrage, des fonctions de guidage assez élaborées en maîtrisant leurs déformations sous les sollicitations de service. Ceci afin de réaliser, par exemple, des essieux auto-directionnels, c'est à dire des essieux qui braquent légèrement le plan des roues sous le seul effet des transferts de charge. Un autre exemple des possibilités offertes par ces articulations élastomériques est de permettre d'intégrer, en plus du degré de liberté nécessaire à la fonction principale de suspension, un degré de liberté horizontal qui améliore sensiblement le confort du véhicule.

Dans le cas des articulations élastomériques telles qu'utilisées pour lier des bras de suspension (triangle inférieur, bras tirés...) à la caisse, leur contribution à la reprise de la charge est négligeable (de l'ordre du pour-cent). En fait, leur contribution à la reprise de la charge, faible et inhérente (puisque l'élastomère est adhérisé sur les armatures rigides qui l'entourent), n'intervient absolument pas dans le dimensionnement.

Or, si l'on cherche à conférer à de telles articulations une réelle contribution à la reprise de la charge, en en faisant donc un véritable ressort de suspension sollicité en torsion, on constate une évolution de la hauteur de caisse du véhicule au cours du temps. On sait que le fluage de l'élastomère en est une cause. Mais on sait aussi que l'essentiel du fluage intervient très rapidement, c'est à dire en quelques jours, de sorte qu'il suffit d'en tenir compte au montage du ressort pour que la hauteur de caisse après quelques jours soit la hauteur prévue lors de la conception du véhicule. Ceci, en pratique, consiste à choisir l'azimut de montage en tenant à la fois compte de la charge nominale du véhicule et du fluage.

Malheureusement, il existe encore des variations de hauteur de caisse que l'on n'explique pas par ces phénomènes. Ces variations apparaissent erratiques. On a constaté des dérives de hauteur de caisse pouvant atteindre plusieurs centimètres. Ce phénomène est très gênant en particulier pour les opérations de réglage final des paramètres géométriques dépendants de la hauteur de caisse ou de l'assiette (c'est à dire la position angulaire de la caisse par rapport au sol horizontal) du véhicule. Ce peut être le cas, par exemple, de l'orientation du faisceau des phares ou du répartiteur de la puissance de freinage.

Il a été découvert que l'hystérèse de l'élastomère est une des causes de ces variations. L'hystérèse, phénomène bien connu en soi, fait que la raideur apparente du matériau est différente lors de l'augmentation de la contrainte et lors de la diminution de cette contrainte. Les courbes contrainte/déformation caractéristiques "aller" et "retour" ne se superposent pas comme, par exemple, pour un ressort métallique traditionnel. On a découvert que, tant que le ressort élastomérique n'a pas été sollicité jusqu'en butée de suspension, la hauteur de caisse (à charge égale) n'est pas stabilisée. Il semble que l'ampleur de ce phénomène soit dû au fait que le point de départ du fonctionnement du ressort, c'est à dire l'état libre de toute contrainte, est très éloigné de la zone du diagramme contrainte/déformation qui est balayée par le ressort élastomérique en fonctionnement sur un véhicule. Ladite zone du diagramme se déplace de façon sensible chaque fois que le ressort atteint une "nouvelle" déformation maximale, supérieure aux déformations maximales précédemment atteintes. On constate en fait que les caractéristiques mécaniques du ressort élastomérique ne deviennent sensiblement constantes dans le temps que lorsque le ressort a atteint (une fois au moins) son état de déformation maximale. C'est cette constatation qui est à l'origine du principe de l'invention selon lequel l'articulation portant une charge doit, pour stabiliser son point de fonctionnement, subir une déformation comparable à la déformation maximale prévue en service.

L'invention consiste donc en un procédé de stabilisation des caractéristiques mécaniques de fonctionnement d'une articulation élastique élastomérique, ladite articulation étant destinée à assurer une fonction de ressort dans un dispositif de suspension pour véhicule, ledit véhicule ayant une caisse et des roues, ladite articulation élastique étant destinée à reprendre une charge nominale donnée, ladite suspension autorisant un débattement jusqu'à une limite de compression maximale correspondant à une déformation maximale M subie par ladite articulation (1), ledit procédé consistant, avant la mise en service normal dudit véhicule, à soumettre ladite articulation (1) à une déformation R comparable à la déformation maximale M.

De préférence, ce procédé est caractérisé en ce que ladite déformation R est supérieure ou égale à ladite déformation maximale M.

De préférence, ce procédé est de plus caractérisé en ce que ladite articulation élastique est soumise à ladite déformation R puis ladite déformation R est relâchée jusqu'à une déformation S correspondant sensiblement à ladite charge nominale.

De préférence, le procédé de l'invention est également caractérisé en ce que, ledit véhicule présentant une hauteur de caisse par rapport au sol, ladite articulation élastique est soumise à ladite déformation R lors du montage final du véhicule et avant la réalisation de réglages liés à ladite hauteur de caisse.

De préférence, le procédé de l'invention est caractérisé en ce que ladite déformation R est obtenue, après montage dudit dispositif de suspension sur le véhicule, en faisant parcourir audit dispositif de suspension un débattement allant jusqu'à ladite limite de compression maximale.

De préférence, ce procédé est, de plus, caractérisé en ce que, le véhicule étant au sol, ladite déformation R est obtenue, après montage dudit dispositif de suspension sur le véhicule, en exerçant une force appropriée sur ladite caisse dudit véhicule.

Alternativement, le procédé de l'invention est caractérisé en ce que ladite déformation R est obtenue, après montage dudit dispositif sur le véhicule, en exerçant une force sur les roues dudit véhicule dont la caisse est maintenue immobilisée.

Alternativement, le procédé de l'invention est caractérisé en ce que ladite articulation élastique est soumise à ladite déformation R avant le montage dudit dispositif de suspension sur ledit véhicule.

De préférence, ce procédé est, de plus, caractérisé en ce que ladite articulation élastique est soumise à ladite déformation R avant le montage de ladite articulation élastique au sein dudit dispositif de suspension.

L'invention consiste également en une articulation élastique élastomérique destinée à assurer une fonction de ressort dans un dispositif de suspension de véhicule, ladite articulation portant une part substantielle de la charge, ladite articulation élastique étant caractérisée en ce qu'elle comporte des moyens qui la bloquent dans un état provisoire de déformation présélectionnée, ladite déformation présélectionnée étant de même nature qu'une déformation occasionnée par ladite charge.

De préférence, l'articulation élastique de l'invention est caractérisée en ce qu'elle comporte des évidements de matière élastomérique et que des cales sont présentes dans lesdits évidements.

Alternativement, l'articulation élastique de l'invention est caractérisée en ce que, ladite articulation élastique comprenant des armatures rigides mobiles l'une par rapport à l'autre, ladite articulation élastique est maintenue dans ledit état provisoire de déformation présélectionnée par une bride liant de façon provisoire lesdites armatures rigides.

Ainsi, l'invention propose de soumettre le ressort élastomérique, avant son montage, lors de son montage et en tout cas avant la mise en service normal, c'est-à-dire la livraison du véhicule, à une déformation comparable, c'est-à-dire de même nature, de même sens et d'intensité similaire à la déformation maximale envisageable en service. En pratique, la définition de la déformation maximale envisageable en service dépend de nombreux paramètres car même dans le cas de dispositif de suspension comportant des butées mécaniques de débattement, la limite de débattement ne peut être située précisément car elle est fonction des déformations (élastiques ou plastiques) des butées et du reste de la structure. Cependant, on peut convenir d'une déformation maximale correspondant, par exemple, à la déformation au delà de laquelle la structure rigide du dispositif de suspension se déforme plastiquement. On peut également convenir que la déformation maximale est atteinte lorsque la roue vient au contact du passage de roue ménagé dans la carrosserie si cette éventualité est raisonnable. Ce choix précis de la déformation maximale de référence est arbitraire mais les écarts sont limités en terme de déformation du ressort (par exemple, au maximum de l'ordre de 10%). Le principe de l'invention est de faire subir à l'articulation une déformation telle que son point d'équilibre autour de la charge statique est stabilisé. Cet objectif est atteint par le fait que l'articulation subit une déformation comparable à la déformation maximale envisagée en service normal. De préférence, afin de limiter encore l'instabilité du point d'équilibre statique de la suspension, on veillera à faire subir à l'articulation une déformation égale ou légèrement supérieure (par exemple de l'ordre de l'incertitude sur la déformation maximale envisageable).

Des tests ont montré qu'une déformation pendant un temps très court (de l'ordre de la seconde) était suffisante pour obtenir l'effet désiré. On a aussi constaté que le fait de maintenir cette déformation pendant un temps plus long (plusieurs jours, voire plusieurs semaines) n'avait pas de conséquence préjudiciable.

L'invention propose différentes mises en oeuvre de cette solution, le principe commun étant de soumettre l'articulation élastique à une déformation R comparable à la déformation maximale M envisagée en service sur le dispositif de suspension et, de préférence, relâcher ensuite cette contrainte, pour atteindre un état de déformation S correspondant sensiblement à la charge nominale prévue sur le véhicule. Les dispositifs de suspension (ou les véhicules destinés à en être équipés) comportent généralement une butée limitant le débattement de la suspension, c'est-à-dire que la déformation maximale M envisageable est sensiblement (voir plus haut) déterminée par les caractéristiques géométriques de construction du véhicule et qu'elle est matérialisée sur le véhicule.

Une première possibilité de mise en oeuvre de l'invention consiste, après montage de l'essieu sur le véhicule, à solliciter la suspension de façon à l'amener en limite de débattement, à la compression maximale permise par la géométrie (et, le cas échéant, les déformations raisonnables de la structure ou des butées) et ensuite, de préférence, laisser le véhicule reposant sur ses roues, le ressort élastomérique supportant la charge statique nominale.

Une deuxième possibilité de mise en oeuvre de l'invention consiste, après l'assemblage des éléments constitutifs du dispositif de suspension mais avant montage sur le véhicule, à solliciter l'essieu de façon appropriée pour le soumettre à la déformation R, relâcher cette contrainte jusqu'au niveau de déformation S (correspondant sensiblement à la reprise de la charge statique nominale), puis bloquer les bras de suspension par rapport à une référence châssis du véhicule jusqu'à ce que ce sous-ensemble soit monté sur le véhicule et de préférence jusqu'à la mise en charge statique.

Une troisième possibilité de mise en oeuvre de l'invention consiste à imposer la déformation R à une articulation élastique élastomérique avant son montage au sein d'un dispositif de suspension, puis la maintenir déformée au niveau de déformation S par un dispositif de blocage de l'articulation jusqu'à son montage et de préférence jusqu'à sa mise en charge nominale.

En fait, le procédé de l'invention peut être mis en oeuvre à n'importe quel stade de l'assemblage du véhicule avant sa mise en service. Cependant, les nombreuses variantes envisageables ne présentent pas les mêmes avantages et les mêmes contraintes.

Dans le cas d'articulations de suspension présentant des évidements de matière élastomérique, comme décrites dans la demande de brevet EP 0 956 984, les évidements de matière élastomérique se déformant sous la contrainte, on peut utiliser, comme moyen de blocage de l'articulation, des cales dont les profils correspondent à ceux des évidements déformés. On place alors ces cales dans les évidements avant de relâcher complètement la contrainte, puis on extrait ces cales après montage sur le véhicule, de préférence après mise en charge statique.

Dans le cas d'un dispositif de suspension comprenant également un amortisseur, on peut maintenir la contrainte du ressort élastomérique en bloquant provisoirement le débattement de la suspension par l'intermédiaire d'une limitation mécanique ou hydraulique de la course de l'amortisseur.

On peut aussi adopter toute autre solution de blocage mécanique bridant angulairement les armatures rigides du ressort élastomérique radialement extérieure et intérieure l'une par rapport à l'autre, puis on libère les armatures après le montage du ressort sur le dispositif de suspension, de préférence sur le véhicule après mise en charge statique.

De manière générale, on préfère bloquer l'articulation élastique à un niveau de déformation S sensiblement égal à la déformation correspondant à la charge nominale. Mais pour des raisons diverses, on pourra opter pour un niveau de déformation sensiblement différent, par exemple un niveau de déformation inférieur (contrainte plus faible, d'où un coût des éléments de maintien potentiellement plus bas et moins d'énergie stockée) ou un niveau de déformation supérieur (meilleure anticipation du fluage ultérieur, encombrement réduit).

Les solutions visant à procéder à la stabilisation des caractéristiques mécaniques de fonctionnement d'une articulation bien avant le montage (plusieurs jours) sur le véhicule présentent des avantages supplémentaires: d'une part, on intègre le fluage des premiers jours (voir plus haut) ce qui permet de procéder aux réglages finaux du véhicule (réglages du faisceau des phares, du répartiteur de freinage, du train avant, etc...) dans une configuration encore plus proche de la situation ultérieure de service et d'autre part, cela autorise le montage (à l'occasion d'une réparation) d'une telle articulation par un professionnel normalement équipé sans que le phénomène de variation de hauteur de caisse décrit plus haut ne se manifeste.

Les principes de l'invention et certains modes préférés de l'invention seront également bien illustrés par la description des figures suivantes:
- figure 1: graphique représentant l'évolution de la contrainte en relation avec la déformation d'une articulation élastomérique lors d'une série de cycles de déformation.
- figure 2: vue d'un dispositif de suspension arrière de véhicule comprenant une articulation élastique élastomérique assurant (entre autres) la fonction de ressort, dans son état déformé correspondant à une charge nominale,
- figure 3: vue d'une articulation élastique élastomérique dans son état libre de toute contrainte,
- figure 4: schéma d'un mode de réalisation des moyens de blocage de l'articulation,
- figure 5: schéma d'un deuxième exemple de réalisation des moyens de blocage de l'articulation,
- figure 6: schéma d'un troisième exemple de réalisation du blocage d'un dispositif de suspension,
- figure 7: vue partielle d'un véhicule représentant une possibilité de mise en oeuvre du procédé de l'invention.

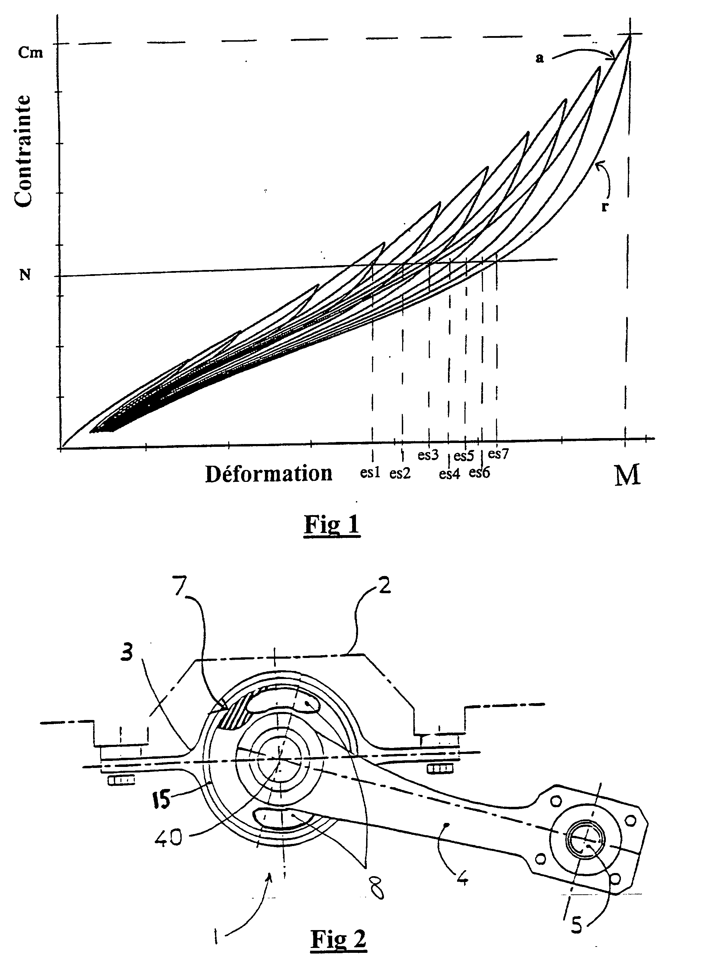

Le graphique de la figure 1 représente l'évolution de la contrainte (par exemple, le couple transmis par le bras de roue) en fonction de la déformation (par exemple, hauteur de caisse ou position angulaire du bras de roue) d'une articulation élastomérique porteuse au cours d'une série de cycles de charge d'intensité croissante. On visualise bien le phénomène d'hystérèse qui fait que, pour chaque cycle, les courbes "aller" (a) (correspondant à une contrainte croissante) ne se superposent pas aux courbes "retour" (r) (correspondant à une contrainte décroissante), comme ce serait le cas pour un ressort métallique couramment employé dans le domaine des suspensions. On visualise également le fait que pour une contrainte égale N, le point d'équilibre (es1, es2, es3, es4, es5, es6, es7) varie d'un cycle à l'autre tant que la déformation maximale M n'a pas été atteinte. D'où les évolutions constatées de la hauteur de caisse d'un véhicule équipé d'un dispositif de suspension comprenant une telle articulation élastique élastomérique assurant (entre autres) la fonction de ressort.

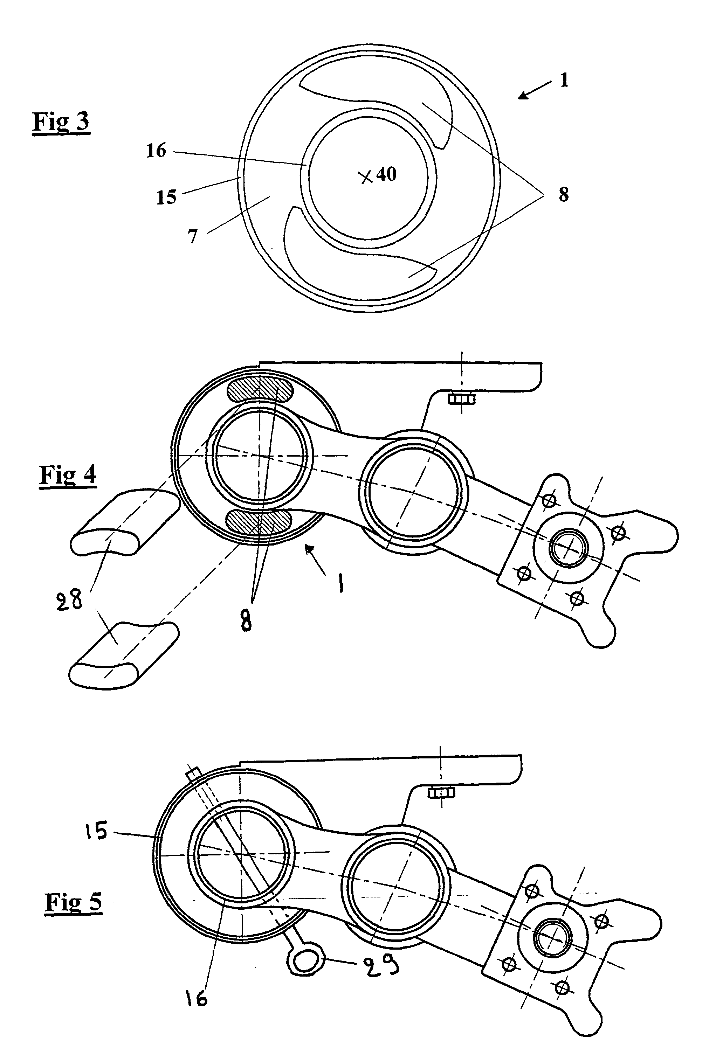

La figure 2 représente un exemple de dispositif de suspension arrière de véhicule, dont on peut trouver une description plus complète dans la demande internationale WO 97/47486. L'articulation (1) est fixée à la caisse (2) d'un véhicule par l'intermédiaire d'un support (3) et maintient un bras de suspension (4) qui porte une fusée (5) (la roue portée par la fusée (5) n'est pas représentée). L'articulation (1) est constituée de deux armatures (15, 16) (voir figure 3) rigides, cylindriques et concentriques, reliées par un manchon de matériau élastomérique (7). Cet ensemble assure une fonction de ressort de suspension lors des mouvements du bras (4) autour de son axe (40), le manchon élastomérique (7) étant sollicité en torsion. Dans la représentation de la figure 2, la suspension porte la charge statique nominale N alors que la figure 3 correspond à l'état d'une articulation (1) libre de toute contrainte, par exemple, brute de fabrication.

Une telle articulation (1) peut, par exemple, être conçue pour fonctionner avec une déformation nominale statique S de l'ordre de 45° et une déformation maximale M de l'ordre de 60°. C'est à dire que la torsion nécessaire à la reprise de la charge nominale est de 45° et que les caractéristiques de la suspension et du véhicule font qu'en cas de débattement maximal, la torsion est de l'ordre de 60° par rapport à l'état libre de toute contrainte.

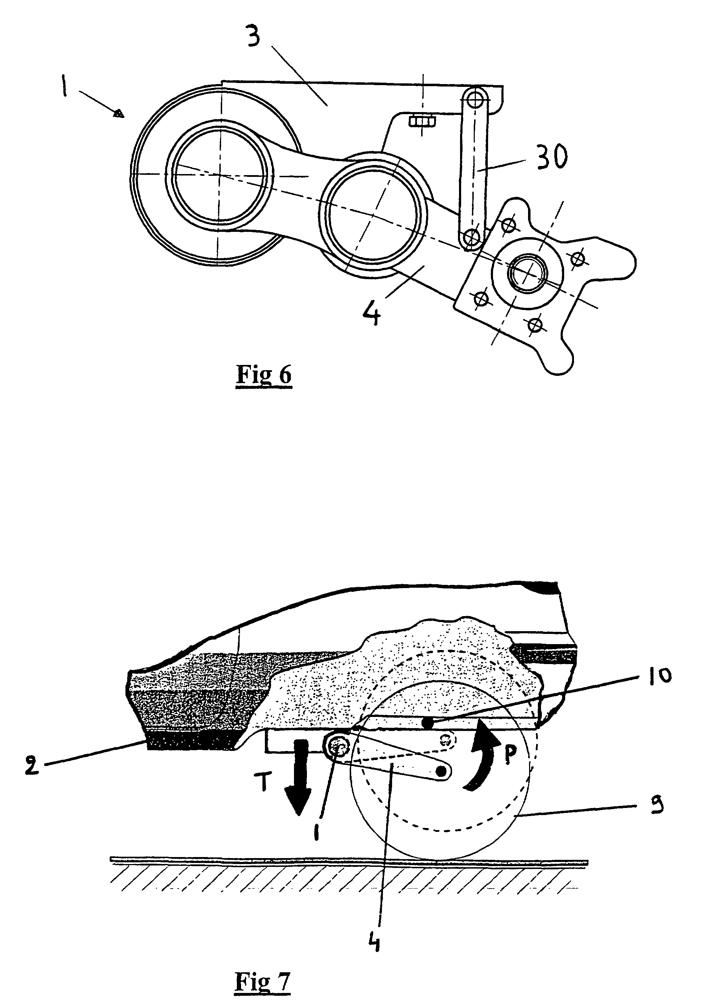

Dans cet exemple, le matériau élastomérique (7) comporte des évidements (8) sous forme d'alvéoles afin de présenter des raideurs différentes en fonction de l'azimut. Lors de la mise en oeuvre du procédé de l'invention, on impose une déformation à l'articulation. Si le matériau élastomérique (7) comporte des évidements (8) comme c'est le cas ici, le profil de ces évidements (8) varie comme le montre la différence de profil entre les figures 2 et 3. Si, pendant que le matériau élastomérique (7) est déformé, on introduit dans ces évidements (8), des cales de profil complémentaire, le mouvement inverse se trouve empêché dans une large mesure. On peut ainsi, par exemple, maintenir une articulation dans une position sensiblement maîtrisée correspondant à, ou proche de, la position de charge statique en service sur le véhicule, telle que celle de la figure 2. Cette possibilité est illustrée à la figure 4 qui montre des cales (28) dont le profil est complémentaire de celui des évidements (8) du manchon élastomérique (7) afin de maintenir l'articulation porteuse (1) dans une configuration proche de la déformation statique nominale S en service sur le véhicule.

Une alternative est représentée à la figure 5 où une goupille (29) immobilise les armatures intérieure et extérieure dans une configuration proche de la déformation statique nominale S en service sur le véhicule. Ainsi, après montage sur le véhicule et application de la charge statique, la ou les goupilles (29) sont facilement extraites des articulations. La goupille est naturellement un cas particulier de bridage mais bien d'autres types de brides peuvent être utilisées.

Une autre alternative est représentée à la figure 6 où une biellette (30) solidarise provisoirement les éléments rigides du dispositif de suspension que sont le bras (4) et le support (3) destiné à la liaison à la caisse du véhicule. Ainsi, après assemblage du dispositif de suspension et application d'une déformation comparable à la déformation maximale prévue en service, le dispositif est maintenu en configuration de charge statique et acheminé en vue du montage sur le véhicule. Une fois monté sous la caisse et chargé, le dispositif de suspension est débarrassé de cette biellette provisoire (30). Ici également, la biellette (30) est un cas particulier de bridage mais bien d'autres types de bridages peuvent être utilisées.

A la figure 7, on a représenté un autre moyen de mettre en oeuvre le procédé de l'invention. Dans ce cas, le procédé est mis en oeuvre après l'assemblage du dispositif de suspension et le montage sur le véhicule. On impose alors à la suspension une contrainte suffisante pour lui faire parcourir la totalité de son débattement, c'est-à-dire jusqu'à atteindre la limite de débattement maximale schématisée ici par une butée (10). Ceci peut être réalisé de diverses manières. On peut exercer sur la caisse (2), une force de traction verticale (T) orientée vers le sol, tandis que le véhicule est immobilisé, reposant au sol sur ses roues (9). On peut, alternativement, exercer sur les roues (9) ou sur les bras (4) de suspension, une poussée (P) verticale orientée vers le haut cependant que la caisse (2) du véhicule est maintenue immobilisée par un bridage temporaire. On laissera ensuite de préférence le véhicule reposer sur ses roues, c'est à dire dans une configuration proche de la charge nominale. La hauteur de caisse est, à cet instant, stabilisée à un niveau correspondant sensiblement au niveau prédéterminé lors de la conception du véhicule et on peut alors procéder aux réglages finaux qui dépendent de cette hauteur de caisse (par exemple, l'orientation du faisceau des phares ou le répartiteur de freinage...).

Sans sortir de l'esprit de l'invention, l'homme du métier pourra imaginer d'autres possibilités de mise en oeuvre du procédé de l'invention comme, par exemple au cours d'un essai, celle de faire franchir un dos d'âne au véhicule à une vitesse telle que sa suspension soit sollicitée sensiblement sur tout son débattement.

## Revendications

1. Procédé de stabilisation des caractéristiques mécaniques de fonctionnement d'une articulation élastique élastomérique (1), ladite articulation (1) étant destinée à assurer une fonction de ressort dans un dispositif de suspension pour véhicule, ledit véhicule ayant une caisse (2) et des roues (9), ladite articulation élastique (1) étant destinée à reprendre une charge nominale donnée, ladite suspension autorisant un débattement jusqu'à une limite de compression maximale correspondant à une déformation maximale M subie par ladite articulation (1), ledit procédé consistant, avant la mise en service normal dudit véhicule, à soumettre ladite articulation (1) à une déformation R comparable à la déformation maximale M.

2. Procédé selon la revendication 1, **caractérisé en ce que** ladite déformation R est supérieure ou égale à ladite déformation maximale M.

3. Procédé suivant selon l'une des revendications précédentes, **caractérisé en ce que** ladite articulation élastique (1) est soumise à ladite déformation R puis ladite déformation R est relâchée jusqu'à une déformation S correspondant sensiblement à ladite charge nominale.

4. Procédé suivant l'une des revendications précédentes, **caractérisé en ce que**, ledit véhicule présentant une hauteur de caisse par rapport au sol, ladite articulation élastique (1) est soumise à ladite déformation R lors du montage final du véhicule et avant la réalisation de réglages liés à la hauteur de caisse.

5. Procédé suivant l'une des revendications précédentes, **caractérisé en ce que** ladite déformation R est obtenue, après montage dudit dispositif de suspension sur le véhicule, en faisant parcourir audit dispositif de suspension un débattement allant jusqu'à ladite limite de compression maximale.

6. Procédé suivant l'une des revendications précédentes, **caractérisé en ce que**, le véhicule étant au sol, ladite déformation R est obtenue, après montage dudit dispositif de suspension sur le véhicule, en exerçant une force (T) appropriée sur ladite caisse (2) dudit véhicule.

7. Procédé suivant l'une des revendications 1 à 5, **caractérisé en ce que** ladite déformation R est obtenue, après montage dudit dispositif sur le véhicule, en exerçant une force sur les roues (9), la caisse (2) est maintenue immobilisée.

8. Procédé suivant l'une des revendications 1 à 3, **caractérisé en ce que** ladite articulation élastique (1) est soumise à ladite déformation R avant le montage dudit dispositif de suspension sur ledit véhicule.

9. Procédé suivant l'une des revendications 1 à 3, **caractérisé en ce que** ladite articulation élastique (1) est soumise à ladite déformation R avant le montage de ladite articulation élastique (1) au sein dudit dispositif de suspension.

10. Procédé suivant l'une des revendications 8 ou 9, **caractérisé en ce que** ladite articulation élastique (1) est soumise à ladite déformation R et maintenue déformée par l'intermédiaire d'un dispositif de blocage (28, 29, 30).

11. Procédé suivant l'une des revendications 8 à 10, **caractérisé en ce que** ladite articulation élastique (1) est maintenue déformée par l'intermédiaire dudit dispositif de blocage (28, 29, 30) dans un état de déformation S comparable à un état de déformation correspondant à ladite charge nominale.

12. Procédé suivant l'une des revendications 10 ou 11, **caractérisé en ce que** dans le cas d'une articulation élastique élastomérique (1) comportant un évidement (8) de matière élastomérique, ledit dispositif de blocage comprend une cale (28) que l'on introduit dans ledit évidement (8).

13. Procédé suivant l'une des revendications 10 ou 11, **caractérisé en ce que**, ladite articulation (1) étant essentiellement constituée d'un manchon élastomérique reliant des armatures rigides (15,16), lesdites armatures rigides (15,16) ayant, en service, un mouvement relatif, ledit dispositif de blocage comprend une bride (29) liant de façon démontable lesdites armatures rigides (15, 16).

14. Procédé suivant l'une des revendications 10 ou 11, **caractérisé en ce que**, ledit dispositif de suspension comprenant des éléments rigides (3,4) mobiles l'un par rapport à l'autre lors dudit débattement, ledit dispositif de blocage comprend une biellette (30) liant de façon démontable lesdits éléments rigides (3, 4).

15. Procédé selon l'une des revendications précédentes dans lequel la fonction de ressort de suspension est assurée par un manchon (7) élastomérique étant sollicité en torsion.

16. Articulation élastique élastomérique (1) destinée à assurer une fonction de ressort dans un dispositif de suspension de véhicule, ladite articulation (1) portant une part substantielle de la charge, ladite articulation élastique (1) étant **caractérisée en ce qu'**elle comporte des moyens (28, 29, 30) qui la bloquent dans un état provisoire de déformation présélectionnée, ladite déformation présélectionnée étant de même nature qu'une déformation occasionnée par ladite charge, ladite articulation ayant été stabilisée par un procédé selon la revendication 1.

17. Articulation élastique (1) selon la revendication 16, **caractérisée en ce qu'**elle comporte des évidements (8) de matière élastomérique et que des cales (28) sont présentes dans lesdits évidements.

18. Articulation élastique (1) selon la revendication 16, **caractérisée en ce que**, ladite articulation élastique (1) comprenant des armatures rigides (15, 16) mobiles l'une par rapport à l'autre, ladite articulation élastique (1) est maintenue dans ledit état provisoire de déformation présélectionnée par un bridage (29, 30) liant de façon provisoire lesdites armatures rigides (15, 16).

19. Articulation selon l'une des revendications 16 ou 17 **caractérisé en ce que** la fonction de ressort de suspension est assurée par un manchon (7) élastomérique étant sollicité en torsion.

## Patentansprüche

1. Verfahren zur Stabilisierung der mechanischen Funktionseigenschaften eines elastischen Elastomergelenks (1), wobei das genannte Gelenk (1) dazu bestimmt ist, eine Federfunktion in einer Fahrzeug-Aufhängungsvorrichtung sicherzustellen, das genannte Fahrzeug eine Karosserie (2) und Räder (9) hat, das genannte, elastische Gelenk (1) dazu bestimmt ist, eine gegebene Nennlast aufzunehmen, die genannte Aufhängung ein Durchfedern bis zu einer Grenze maximaler Kompression zuläßt, die einer maximalen Verformung M entspricht, die vom genannten Gelenk (1) erfahren wird, und das genannte Verfahren darin besteht, das genannte Gelenk (1) einer Verformung R zu unterziehen, die mit der maximalen Verformung M vergleichbar ist, bevor das genannte Fahrzeug in normalen Dienst gestellt wird.

2. Verfahren nach Anspruch 1, **dadurch gekennzeichnet, daß** die genannte Verformung R größer oder gleich der genannten, maximalen Verformung M ist.

3. Verfahren nach einem der vorausgehenden Ansprüche, **dadurch gekennzeichnet, daß** das genannte, elastische Gelenk (1) der genannten Verformung R unterzogen wird und dann die genannte Verformung R bis auf eine Verformung S aufgehoben wird, die im wesentlichen der genannten Nennlast entspricht.

4. Verfahren nach einem der vorangehenden Ansprüche, **dadurch gekennzeichnet, daß**, während das genannte Fahrzeug eine Höhe der Karosserie über dem Boden aufweist, das genannte, elastische Gelenk (1) der genannten Verformung R während der Endmontage des Fahrzeugs und vor der Durchführung von Einstellungen unterzogen wird, die mit der Höhe der Karosserie verbunden sind.

5. Verfahren nach einem der vorangehenden Ansprüche, **dadurch gekennzeichnet, daß** die genannte Verformung R nach der Montage der genannten Fahrzeug-Aufhängungsvorrichtung erhalten wird, indem man die genannte Aufhängungsvorrichtung eine Durchfederung durchlaufen läßt, die bis zur genannten, maximalen Kompressionsgrenze geht.

6. Verfahren nach einem der vorangehenden Ansprüche, **dadurch gekennzeichnet, daß**, während sich das Fahrzeug auf dem Boden befindet, die genannte Verformung R nach der Montage der genannten Aufhängungsvorrichtung am Fahrzeug erhalten wird, indem man eine geeignete Kraft (T) auf die Karosserie (2) des genannten Fahrzeugs ausübt.

7. Verfahren nach einem der Ansprüche 1 bis 5, **dadurch gekennzeichnet, daß** die genannte Verformung R nach der Montage der genannten Vorrichtung am Fahrzeug erhalten wird, indem man eine Kraft auf die Räder (9) ausübt, wobei die Karosserie (2) unbeweglich gehalten wird.

8. Verfahren nach einem der Ansprüche 1 bis 3, **dadurch gekennzeichnet, daß** das genannte, elastische Gelenk (1) der genannten Verformung R vor der Montage der genannten Aufhängungsvorrichtung am genannten Fahrzeug unterzogen wird.

9. Verfahren nach einem der Ansprüche 1 bis 3, **dadurch gekennzeichnet, daß** das genannte, elastische Gelenk (1) der genannten Verformung R vor der Montage des genannten, elastischen Gelenks (1) innerhalb der genannten Aufhängungsvorrichtung unterzogen wird.

10. Verfahren nach einem der Ansprüche 8 oder 9, **dadurch gekennzeichnet, daß** das genannte, elastische Gelenk (1) der genannten Verformung R unterzogen und mittels einer Sperrvorrichtung (28, 29, 30) verformt gehalten wird.

11. Verfahren nach einem der Ansprüche 8 bis 10, **dadurch gekennzeichnet, daß** das genannte, elastische Gelenk (1) mittels der genannten Sperrvorrichtung (28, 29, 30) in einem Zustand der Verformung S verformt gehalten wird, der mit einem Verformungszustand vergleichbar ist, der der genannten Nennlast entspricht.

12. Verfahren nach einem der Ansprüche 10 oder 11, **dadurch gekennzeichnet, daß** im Fall eines elastischen Elastomergelenks (1), das eine Aussparung (8) im Elastomermaterial aufweist, die genannte Sperrvorrichtung einen Keil (28) aufweist, den man in die genannte Aussparung (8) einführt.

13. Verfahren nach einem der Ansprüche 10 oder 11, **dadurch gekennzeichnet, daß**, während das genannte Gelenk (1) im wesentlichen aus einer Elastomermuffe gebildet ist, die die starren Beschläge (15, 16) verbindet, die genannten, starren Beschläge (15, 16) im Betrieb eine Relativbewegung haben, wobei die genannte Sperrvorrichtung einen Steg (29) aufweist, der abnehmbar die genannten, starren Beschläge (15, 16) verbindet.

14. Verfahren nach einem der Ansprüche 10 oder 11, **dadurch gekennzeichnet, daß**, während die genannte Aufhängungsvorrichtung starre Elemente (3, 4) aufweist, die zueinander während der genannten Durchfederung beweglich sind, die genannte Sperrvorrichtung eine Schwinge (30) aufweist, die abnehmbar die genannten, starren Elemente (3, 4) verbindet.

15. Verfahren nach einem der vorangehenden Ansprüche, worin die Federfunktion der Aufhängung durch eine Elastomermuffe (7) sichergestellt ist, die auf Torsion belastet ist.

16. Elastisches Elastomergelenk (1), das dazu bestimmt ist, eine Federfunktion in einer Fahrzeug-Aufhängungsvorrichtung sicherzustellen, wobei das genannte Gelenk (1) einen wesentlichen Teil der Last trägt, und das genannte, elastische Gelenk (1) **dadurch gekennzeichnet ist, daß** es Mittel (28, 29, 30) aufweist, die es in einem vorläufigen Zustand der vorgewählten Verformung blockieren, die genannte, vorgewählte Verformung der selben Natur ist wie eine gelegentlich durch die genannte Last verursachte Verformung, und das genannte Gelenk durch ein Verfahren gemäß Anspruch 1 stabilisiert ist.

17. Elastisches Gelenk (1) nach Anspruch 16, **dadurch gekennzeichnet, daß** es Aussparungen (8) im Elastomermaterial aufweist, und daß die Keile (28) in den genannten Aussparungen vorliegen.

18. Elastisches Gelenk (1) nach Anspruch 16, **dadurch gekennzeichnet, daß** das genannte, elastische Gelenk (1) starre Beschläge (15, 16) aufweist, die zueinander beweglich sind, und daß das genannte, elastische Gelenk (1) im genannten, vorläufigen Zustand vorgewählter Verformung durch eine Schwinge (29, 30) gehalten wird, die vorläufig die genannten, starren Beschläge (15, 16) verbindet.

19. Gelenk nach einem der Ansprüche 16 oder 17, **dadurch gekennzeichnet, daß** die Federfunktion der Aufhängung durch eine Elastomermuffe (7) sichergestellt, die auf Zug belastet wird.

## Claims

1. A process for stabilising the mechanical operating characteristics of an elastomeric flexible joint (1), said joint (1) being intended to act as a spring in a vehicle suspension device, said vehicle having a body (2) and wheels (9), said flexible joint (1) being intended to take up a given rated load, said suspension permitting as far as a maximum compression limit corresponding to a maximum deformation M undergone by said joint (1), said process consisting, before the normal putting into service of the vehicle, of subjecting said joint (1) to a deformation R comparable to the maximum deformation M.

2. A process according to Claim 1, **characterised in that** said deformation R is greater than or equal to said maximum deformation M.

3. A process according to one of the preceding claims, **characterised in that** said flexible joint (1) is subjected to said deformation R, then said deformation R is relaxed until a deformation S is achieved which corresponds substantially to said rated load.

4. A process according to one of the preceding claims, **characterised in that**, said vehicle having a vehicle trim height relative to the ground, said flexible joint (1) is subjected to said deformation R during the final assembly of the vehicle and before adjustments linked to said vehicle trim height are carried out.

5. A process according to one of the preceding claims, **characterised in that** said deformation R is achieved, after mounting said suspension device on the vehicle, by making said suspension device undergo a displacement which extends as far as said maximum compression limit.

6. A process according to one of the preceding claims, **characterised in that**, the vehicle being on the ground, said deformation R is obtained, after mounting said suspension device on the vehicle, by exerting an appropriate force (T) on said body (2) of said vehicle.

7. A process according to one of Claims 1 to 5, **characterised in that** said deformation R is obtained, after mounting said device on the vehicle, by exerting a force on the wheels (9), the body (2) is kept immobilised.

8. A process according to one of Claims 1 to 3, **characterised in that** said flexible joint (1) is subjected to said deformation R before the mounting of said suspension device on said vehicle.

9. A process according to one of Claims 1 to 3, **characterised in that** said flexible joint (1) is subjected to said deformation R before said flexible joint (1) is mounted within said suspension device.

10. A process according to one of Claims 8 or 9, **characterised in that** said flexible joint (1) is subjected to said deformation R and kept deformed by means of a blocking device (28, 29, 30).

11. A process according to one of Claims 8 to 10, **characterised in that** said flexible joint (1) is kept deformed by means of said blocking device (28, 29, 30) in a state of deformation S comparable to a state of deformation corresponding to said rated load.

12. A process according to one of Claims 10 or 11, **characterised in that** in the case of an elastomeric flexible joint (1) comprising a cutout (8) in the elastomeric material, said blocking device comprises a wedging means (28) which is introduced into said cutout (8).

13. A process according to one of Claims 10 or 11, **characterised in that**, said joint (1) being essentially formed of an elastomeric sleeve connecting rigid reinforcements (15, 16), said rigid reinforcements (15, 16) having, in operation, a relative displacement, said blocking device comprises a clamping means (29) connecting said rigid reinforcements (15, 16) in dismantlable manner.

14. A process according to one of Claims 10 or 11, **characterised in that**, said suspension device comprising rigid elements (3, 4) which are mobile relative to each other upon said displacement, said blocking device comprises a link (30) connecting said rigid elements (3, 4) in dismantlable manner.

15. A process according to one of the preceding claims, in which the function of a suspension spring is assumed by an elastomeric sleeve (7) being under torsional stress.

16. An elastomeric flexible joint (1) intended to act as a spring for a vehicle suspension device, said joint (1) bearing a substantial part of the load, said flexible joint (1) being **characterised in that** it comprises means (28, 29, 30) which block it in a temporary state of preselected deformation, said preselected deformation being of the same type as a deformation caused by said load, said joint having been stabilised by a process according to Claim 1.

17. A flexible joint (1) according to Claim 16, **characterised in that** it comprises cutouts (8) in the elastomeric material and that wedging means (28) are present in said cutouts.

18. A flexible joint (1) according to Claim 16, **characterised in that**, said flexible joint (1) comprising rigid reinforcements (15, 16) which are mobile relative to each other, said flexible joint (1) is kept in said temporary state of preselected deformation by a clamping means (29, 30) temporarily linking said rigid reinforcements (15, 16).

19. A joint according to one of Claims 16 or 17, **characterised in that** the function of a suspension spring is assumed by an elastomeric sleeve (7) being under torsional stress.
